# EUROPEAN PATENT SPECIFICATION

(11) **EP 1 499 778 B1**
(45) Date of publication and mention of the grant of the patent: **12.09.2007**
(21) Application number: 03721165.3
(22) Date of filing: 29.04.2003
(51) Int. Cl.: E02B 17/00, F03D 11/04

(54) **METHOD AND VESSEL FOR MANIPULATING AN OFFSHORE CONSTRUCTION**
VERFAHREN UND WASSERFAHRZEUG ZUR MANIPULATION EINER OFFSHORE-ANLAGE
PROCEDE ET NAVIRE POUR MANIPULER UNE CONSTRUCTION OFFSHORE

(30) Priority: 01.05.2002 NL 1020512
(43) Date of publication of application: 26.01.2005
(73) Proprietor: Marine Structure Consultants (MSC) B.V., 3119 XT Schiedam (NL)
(72) Inventor: MIKX, Johannes, Wilhelmus, Jacobus, NL-3311 CX Dordrecht (NL)
(74) Representative: Winckels, Johannes Hubertus F.
(86) International application number: PCT/NL2003/000314
(87) International publication number: WO 2003/093584

(56) References cited:
- EP-A- 1 101 935
- WO-A-02/48547
- WO-A-99/43956
- GB-A- 2 327 970
- US-A- 4 269 542
- US-B1- 6 171 027

## Description

The invention relates to a method for manipulating an offshore construction, as claimed in claim 1, wherein a first stationary support is realized in the form of a foundation anchored under water on or in a bottom for the offshore construction in a position of use, while the offshore construction in its entirety is placed from a vessel onto the foundation by movable engaging means for moving the offshore construction in a vertical and two mutually perpendicular horizontal directions, wherein the offshore construction, more in particular an offshore construction provided with a mast such as an offshore windmill, is taken up by the movable engaging means connected to the vessel, from a second stationary support outside of the vessel, for instance on the shore or in the proximity thereof, and is secured with respect to the vessel and is shipped to the first stationary support and, via the movable engaging means, is set down thereon in alignment and secured, as well as to a vessel for carrying out such a method.

Such a method and device are known from GB-A-2 327 970, wherein a vessel is shown provided with a crane for moving an offshore construction, such as a windmill, suspended from the crane to a foundation, such that the offshore construction can be installed onto said foundation.

Modern windmills are inter alia composed of a mast and a nacelle mounted on the mast so as to be pivotable in the longitudinal direction of the mast, which nacelle bears blades which, in turn, are pivotable about an axis extending at substantially right angles to the longitudinal direction of the mast. Such windmills placed on land have taught that regular maintenance to mast, blades and nacelle is required. This equally holds for the offshore windmill parks which are booming. A problem is that then, for intended operations to be regularly carried out, such offshore windmills are less well accessible than is the case with windmills placed on land.

The invention contemplates creating conditions such that an offshore construction, more in particular an offshore construction provided with a tall mast, such as a windmill, can be placed rapidly and in alignment. What is also contemplated is to arrange all this in a manner such that then, maintenance operations with offshore constructions can be carried out in a manner comparable to that used with windmills placed on land.

According to the invention, this is achieved if for handling the offshore construction, more in particular an offshore construction provided with a mast such as an offshore windmill, the offshore construction is clamped and secured by a supporting device forming part of the movable engaging means and being movable in the two mutually perpendicular horizontal directions with respect to the vessel, said supporting device engaging the offshore construction no higher than its center of gravity, more preferably near its bottom end. Due to these features, in contrast in particular with a tall offshore construction suspended from a crane and prone to swinging, both the operations of taking up and setting down the offshore construction can be carried out accurately and in alignment, while, due to the offshore construction being fixedly engaged when taken up, it is connected to the vessel in a seaworthy manner without additional operations needing to take place such as securing and taking over by a different device, while in that position, the offshore construction is also ready to be set down on a stationary foundation.

If, in accordance with a further embodiment of the invention, it is further provided that the second stationary support is provided in a working environment which renders the offshore construction optimally accessible for maintenance, repairs, replacement and the like, while the offshore construction is brought, by the vessel, from the first to the second stationary support in a fixed position relative to the engaging means, or from the second to the first stationary support, also, optimal conditions have been created for carrying out the necessary maintenance, replacement and repair operations. In this connection, it appears rather laborious to move the entire bulky and heavy offshore construction for the purpose of making a part thereof properly accessible. However, being able to work in a stable environment, such as on land, near a quay or on a working platform, entails such great advantages that the additional transport operations are amply compensated. Additional transport operations are mentioned here because when these operations are carried out on the offshore construction in situ too, a vessel equipped to that end must travel to and from this offshore construction. The transport proposed according to the invention will be more voluminous and heavier than when working in situ. On land, the transport of such a construction would entail considerable problems, but with transport by water this problem is considerably smaller, also because there is a lot of expertise in that area, for instance, the transport of complete jack-up platforms and platforms with drilling installations can be considered. Therefore, the method proposed according to the invention utilizes an optimal choice of different on-land and offshore techniques, while substantially the advantages specific to both techniques are combined and specific disadvantages are largely avoided. As an additional advantage it can be mentioned that the execution of the operations to be carried out is considerably less sensitive to weather conditions. In addition, it should be noted that the method not only has its advantages with maintenance, repair and replacement operations, but also with installation of, for instance, an offshore windmill park, as the construction, assembly and testing of each windmill can be carried out completely in a controlled and stable environment and the windmill only has to be placed on its foundation for performing its function.

Also as a result of the fixedly and secured fastening of the offshore construction no higher than its point of gravity, more preferably near its bottom end, the engaging means can be provided in the proximity of the location of setting down and coupling, which is beneficial to the aligning and positioning operations.

In accordance with a further embodiment of the invention, operations can be carried out very efficiently, when the offshore construction is taken up in a controlled manner from the one stationary support by the vessel provided to that end with means for moving the offshore construction relative to the stationary support in a controlled manner in three mutually perpendicular directions, more in particular one vertical and two mutually perpendicular horizontal directions, and, after shipping to the other support, is set down on the support with the aid of the vessel in a controlled manner. One and the same vessel then takes care of both the manipulation and the transport of the offshore construction.

According to a further embodiment of the invention, it is preferred that the vertical displacement is effected with the aid of a self-propelling vessel, adjustable relative to the bottom under water, such as a self-propelling jack-up platform and the two mutually perpendicular displacements are effected by a cantilever forming a supporting device, which is connected to the vessel for displacement in two mutually perpendicular horizontal directions, into a projecting position. Through the use of these features, the deployment of towboats is superfluous, while due to the X, Y and Z displacements to be carried out in a mutually independent manner, the various alignment movements can be carried out in an extremely accurate and controlled manner. This method can be refined even further when, furthermore, an offshore construction to be placed on a foundation can be rotated for the purpose of an exact alignment relative to the foundation, preferably about three mutually perpendicular axes.

The vessel can be deployed even more effectively and efficiently when, with it, not only the offshore construction is set on the foundation, but also the foundation anchored on or in the sea bottom is provided with the aid of the vessel suitably designed to that end.

According to a further embodiment of the invention, it is proposed that at least the offshore foundation is composed of at least two parts, while with the vessel, on a foundation part anchored on or in the sea bottom a further foundation part in the form a of a fitting piece or intermediate piece reaching above the water line is provided before the offshore construction is placed on the foundation. Thus, the most vulnerable part of the foundation can also be installed, maintained, repaired or replaced in a simple manner. With the fitting piece or intermediate piece dimensional variations, for instance a not entirely vertical position of the foundation part anchored in the sea bottom, can be compensated. If desired, the fitting piece or intermediate piece can be selected to be comparatively large so that the further part of the foundation can be designed to be lighter and hence to be easier to manipulate. Moreover, with a fitting piece or intermediate piece, the possibility is created, with a relatively small change, to render one and the same foundation suitable for offshore constructions being mutually different, at least in relation to their securing to the foundation.

For the sake the completeness, it is noted that although often, reference is made to a windmill as an offshore construction for which the present method is suitable, it is not excluded that the method can also be used for different offshore constructions. By way of non-limitative enumeration, beacons, lighthouses, transfer units, pump constructions and installations for the oil and gas industry and such can be mentioned.

The invention also relates to a vessel for carrying out a method as discussed and elucidated hereinabove, as claimed in claim 8, i.e. a vessel provided with a deck construction and a supporting device with engaging means being movable in a vertical and two mutually perpendicular horizontal directions to at least a position past the deck construction for moving an offshore construction to or from, setting it down at or picking it up from a location outside of the vessel, said vessel being provided with means suitable for moving the vessel in a stationary position relative to the sea bottom in a controlled manner, i.e. in said vertical direction, said supporting device being connected to the vessel and movable relative to said deck construction of the vessel in two mutually perpendicular directions which are both at right angles to the controlled, substantially vertical displacement of the vessel, i.e. are directed in said two horizontal directions, as disclosed in-GB-A-2 327 970. According to the invention, such a vessel is characterized in that the supporting device is provided with securing and fixing means, being said engaging means, for clamping in the offshore construction around a mast and connected to the supporting device substantially near the level of the deck construction in such a way that said means are only movable in a controlled way in a substantially horizontal plane by said supporting device. With the aid of such a vessel, the offshore construction in its entirety can be placed either on a foundation at the location where the offshore construction is to carry out its function, or on a foundation on which the offshore construction can be built, assembled, tested, maintained, repaired, provided with new parts, et cetera.

According to a further embodiment of the invention, it is preferred that the controlled, vertical displacement can be realized in that the vessel is designed as a self-propelling jack-up platform and the horizontal displacements can be realized by designing the supporting device as a cantilever which is connected to the self-propelling jack-up platform for movement in two horizontal, mutually perpendicular directions, into a projecting position. With a thus designed vessel, taking up and setting down as well as transporting the offshore construction from and to the location of use, or the maintenance or building site, is possible without additional means such as cranes and towboats being required. The cantilever can be of the type as shown in applicant's older US-A-6,171,027.

Securing the offshore construction on the foundation can take place via bolts and nuts. In this and other cases, it may be advantageous when, in accordance with a further embodiment of the invention the securing and clamping means are connected to a part of the supporting construction, said part being able to rotate relative to the remaining part of the supporting device about at least one central axis, preferably three mutually perpendicular central axes.

To enhance the functionality of the vessel even more, it can be provided, according to a further embodiment, that the vessel is designed for placing a foundation for the offshore construction to be placed, in or on the sea bottom. It is then further preferred that the vessel be designed for placing a foundation part designed as a fitting piece or intermediate piece on a previously placed foundation part.

With reference to a possible embodiment represented in a drawing, albeit exclusively by way of a non-limitative example, the method and the vessel for manipulating an offshore construction will presently be further elucidated. In the drawing:
Fig. 1 shows the transport of an offshore construction; and
Fig. 2 shows the placing of the offshore construction.

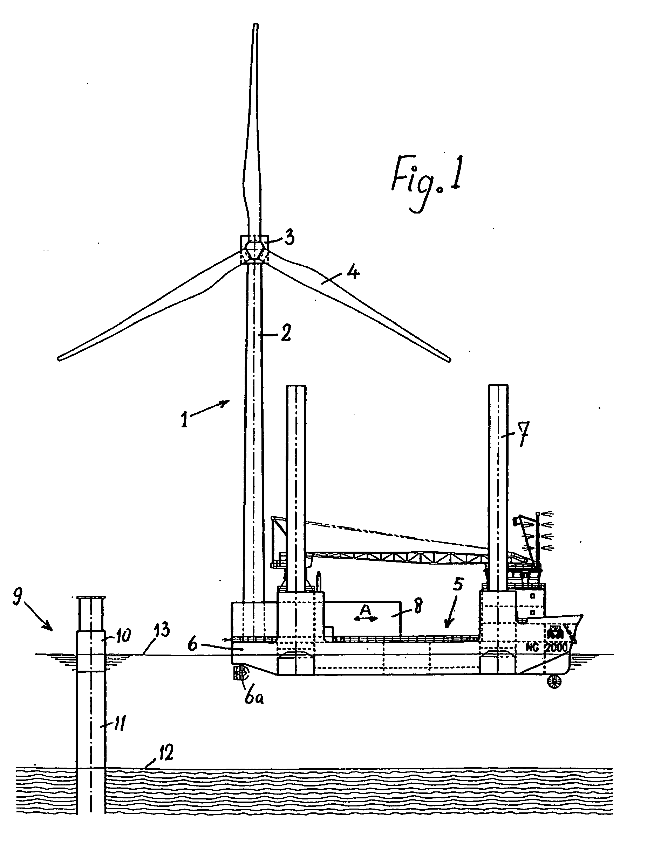

In Fig. 1, an offshore construction 1 is represented, which has the form of a windmill provided with a mast 2, a nacelle 3 and blades 4. The offshore construction 1 is carried by a vessel 5 in the form of a self-propelling jack-up platform with a hull 6, with driving and positioning means 6a, telescopic legs 7 and a supporting device 8, in which the offshore construction 1 has been fastened and secured in the position shown in Fig. 1. The supporting device 8 is movable on the hull 6 of the vessel 5 in a direction in the plane of the drawing indicated with arrow A as well as in a direction at right angles to the plane of the drawing. As an example of such a device, reference can be made to the cantilever in Dutch patent 1006889. For instance, at the location where the offshore construction 1 is clamped-in in the supporting device 8, further, means can be provided for rotating the offshore construction 1 relative to the supporting device 8 or the hull 6 of the vessel 5, through (relative small) angles about three mutually perpendicular axes.

The vessel 5 with offshore construction 1 is on its way to a foundation 9, composed of a bottom part 10 and an intermediate or fitting piece 11. The bottom part 10 is fixedly anchored in a bottom 12 at a distance below the water surface 13.

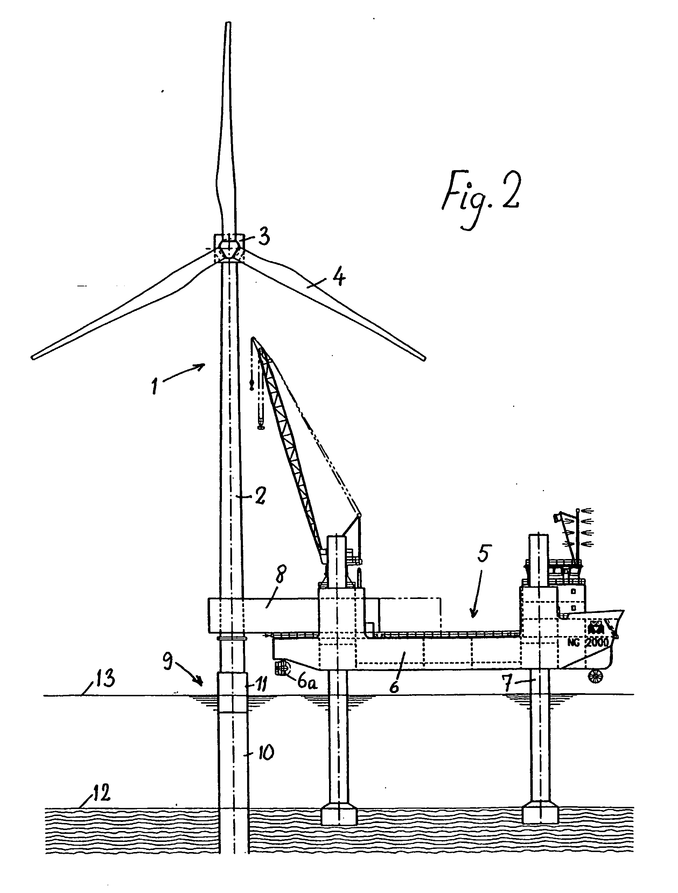

Having arrived at the foundation 9, the vessel 5 is maneuvered into the desired position with the aid of the driving and positioning means 6a, whereupon the legs 7 are lowered by shifting them in vertical direction relative to the hull 6 until they take support on the bottom 12 in the proper manner. Continued shifting of the legs 7 relative to the hull 5 results in the vessel 5 being lifted from the water, with which this is brought in the position shown in Fig. 2, i.e. a position in which the hull 6 has been lifted so high that the bottom side of the offshore construction 1, which is securely clamped by the supporting device 8, is at a level slightly above the top side of the foundation 9.

After this position has been reached, the supporting device 8 is shifted to a position projecting outwards relative to the hull 6 until the bottom side of the offshore construction 1 is located vertically above the top side of the foundation 9. The alignment of the offshore construction 1 relative to the stationary foundation 9 is effected with the supporting device 8 which, to that end, can be shifted in a horizontal plane in two directions perpendicular relative to each other. Once this alignment is effected, the hull 6 is lowered relative to the legs 7 such that the bottom side of the offshore construction 1 will contact the top side of the foundation 9. A possibly slightly inclining position of the mast 2 relative to the foundation 9 could be compensated by having different legs 7 lowered differently, until the bottom side of the offshore construction 1 makes surface-to-surface contact with the top of the foundation, whereupon securing of the mast 2 on the foundation 9 takes place. If desired, the last mentioned corrective operation can be refined by the provision of a mechanism which, when the supporting device 8 and/or the hull 6 are held stationary, enables an angular correction of the mast 2 relative to the foundation 9 about two mutually perpendicular, horizontal axes. A similar angular displacement of the mast 2, but then about a vertical axis, is preferred when the mast 2 is fastened to the foundation 9 via bolts and nuts, so as to align bolt holes in the bottom side of the mast 2 and the top side of the foundation 9 relative to each other.

Taking up an offshore construction from a foundation takes place in reversed order, which, after the foregoing, seems to require no further clarification, which also seems to apply to setting down the offshore construction onto and taking it up from a foundation in a working environment, for instance a foundation on land near a quay or on a working platform, where optimal conditions can be created for carrying out operations on the offshore construction.

After the aforegoing it will also be clear that the vessel 5 can also in a simple manner be made suitable for placing a foundation 9 before the offshore construction 1 is placed thereon and also for intermediately taking up and putting back an intermediate or fitting piece 11 for the purpose of maintenance or replacement.

It is self-evident that within the framework of the invention as outlined in the accompanying claims, many modifications and variants are possible on both the above described method and the vessel used therewith. For instance, the vessel need not have its own drive, but may be moved by a towboat. Further, a crane can be provided, on the transport vessel which may or may not be self-propelling, or on a separate crane vessel, for manipulating the offshore construction. Also, combinations of the above-mentioned methods and devices as well as similar known but not discussed methods and devices are possible for taking up, transporting and setting down an offshore construction in its entirety for the purpose of installation, maintenance, repairs, (partial) replacement, *et cetera.* For setting down and taking up, instead of projecting constructional elements, also constructions are conceivable with a recess or an opening, which can be shipped around and over the foundation such that the offshore construction can be set down or taken up substantially by only lowering or raising it in vertical direction. In the exemplary embodiment, the offshore construction has the form of a windmill. It will be clear that the invention is not limited to the manipulation of windmills, although the invention offers great advantages in that respect.

## Claims

1. Method for manipulating an offshore construction (1), wherein a first stationary support is realized in the form of a foundation (9) anchored under water on or in a bottom (12) for the offshore construction (1) in a condition of use, while the offshore construction (1) in its entirety is placed from a vessel (5) onto the foundation (9) by movable engaging means for moving the offshore construction (1) in a vertical and two mutually perpendicular horizontal directions, wherein the offshore construction (1), more in particular an offshore construction (1) provided with a mast (2) such as an offshore windmill, is taken up by the movable engaging means connected to the vessel (5), from a second stationary support outside of the vessel (5), for instance on the shore or in the proximity thereof, and is secured with respect to the vessel (5) and is shipped to the first stationary support and, via the movable engaging means, is set down thereon in alignment and secured, **characterized in that** for handling the offshore construction (1) is clamped and secured by a supporting device (8) forming part of the movable engaging means and being movable in the two mutually perpendicular horizontal directions with respect to the vessel (5), said supporting device (8) engaging the offshore construction (1) no higher than its center of gravity, more preferably near its bottom end.

2. A method according to claim 1, **characterized in that** the second stationary support is provided in a working environment which renders the offshore construction (1)optimally accessible for maintenance, repair, replacement and the like, while the offshore construction (1), in the position clamped and secured by the supporting device (8), is brought by the vessel (5) from the first to the second stationary support or from the second to the first stationary support.

3. A method according to claim 1 or 2, **characterized in** the offshore construction (1) is taken up from the one stationary support by the vessel (5) provided to that end with the movable engaging means for moving the offshore construction (1) relative to the stationary support in a controlled manner in said three mutually perpendicular directions and, after shipping to the other support, with the aid of the vessel (5) is fastened thereon in a controlled manner.

4. A method according to claim 3, **characterized in that** the vertical displacement is effected with the aid of a self-propelling vessel (5) such as a self propelling jack-up platform, adjustable relative to the bottom under water, and the two mutually perpendicular displacements by a cantilever forming a supporting device (8), connected to the vessel (5) for movement in two horizontal directions, perpendicular relative to each other, into a projecting position with respect to the vessel (5).

5. A method according to any one of the preceding claims, **characterized in that** an offshore construction (1) to be placed on a foundation (9) is rotated relative to the foundation (9) for the purpose of exact alignment.

6. A method according to any one of the preceding claims, **characterized in that** the foundation (9, 10) anchored on or in the bottom (12) is provided with the aid of the vessel (5) suitably designed to that end.

7. A method according to claim 6, **characterized in that** with the vessel (5) on a foundation part (10) anchored on or in the sea bottom (12), a further foundation part reaching above the water line in the form of a fitting piece or intermediate piece (11) is provided before the offshore construction (1) is placed on the foundation (9).

8. A self-propelling transport vessel (5) suitable for use in a method according to one of claims 1-7, which vessel (5) is provided with a deck construction and a supporting device (8) with engaging means, the engaging means being movable in a vertical direction relative to the sea bottom (12) and two mutually perpendicular horizontal directions to at least a position past the deck construction for moving an offshore construction (1) to or from, setting it down at or picking it up from a location outside of the vessel, said vessel (5) being provided with means suitable for moving the vessel (5) in a stationary position relative to the sea bottom (12) in a controlled manner, i.e. in said vertical direction, said supporting device (8) being connected to the vessel (5) and movable relative to said deck construction of the vessel (5) in two mutually perpendicular directions which are both at right angles to the controlled, substantially vertical displacement of the vessel (5), i.e. are directed in said two horizontal directions, **characterized in that** the supporting device (8) is provided with securing and fixing means, being said engaging means, for clamping in the offshore construction (1) around a mast (2) and connected to the supporting device (8) substantially near the level of the deck construction in such a way that said means are only movable in a controlled way in a substantially horizontal plane by said supporting device (8) wherein the engaging means are arranged to engage the offshore construction (1) in a fixing and securing manner no higher than at its point of gravity, more preferably near its bottom end.

9. A vessel according to claim 8, **characterized in that** the means suitable for controlled vertically moving the vessel (5) are realized **in that** the vessel (5) is designed as a self-propelling jack-up platform and by designing the supporting device (8) as a cantilever, connected to the self-propelling jack-up platform for movement in two horizontal directions, perpendicular to each other, into a projecting position with respect to the platform.

10. A vessel according to claim 8 or 9, **characterized in that** the securing and clamping means are connected to a part of the supporting device (8), said part being able to rotate relative to the remaining part of the supporting device (8) about at least one central axis, preferably three mutually perpendicular central axes.

11. A vessel according to any one of claims 8 - 10, **characterized in that** it is designed for placing a foundation (9) for the offshore construction to be positioned, in or on the sea bottom.

12. A vessel according to any one of claim 8 - 11, **characterized in that** it is designed for placing a foundation part designed as a fitting piece (11) or intermediate piece on a previously placed foundation part (10).

## Patentansprüche

1. Verfahren zum Manipulieren einer Offshore-Konstruktion (1), bei der eine erste stationäre Unterstützung in Form eines unter Wasser auf oder in einem Boden (12) verankerten Fundaments (9) für die im Betriebszustand befindliche Offshore-Konstruktion (1) ausgebildet ist, wobei die Offshore-Konstruktion (1) in ihrer Gesamtheit mittels zum Bewegen der Offshore-Konstruktion (1) in einer Vertikal- und in zwei zueinander rechtwinklig verlaufenden Horizontalrichtungen vorgesehener bewegbarer Angreifeinrichtungen von einem Schwimmkörper (5) aus auf dem Fundament (9) platziert wird, wobei die Offshore-Konstruktion (1), insbesondere eine Offshore-Konstruktion (1) mit einem Mast (2), wie z.B. eine Offshore-Windmühle, von einer außerhalb des Schwimmkörpers, beispielsweise am Ufer oder nahe dem Ufer, befindlichen zweiten stationären Unterstützung aus von mit dem Schwimmkörper (5) verbundenen bewegbaren Angreifeinrichtungen aufgenommen und relativ zu dem Schwimmkörper (5) gesichert und zu der ersten stationären Unterstützung transportiert wird und mittels der bewegbaren Angreifeinrichtungen in ausgerichtetem Zustand auf dieser abgesetzt und gesichert wird,
**dadurch gekennzeichnet, dass**
zu Handhabungszwecken die Offshore-Konstruktion (1) mittels einer Unterstützungsvorrichtung (8), die Teil der bewegbaren Angreifeinrichtungen ist und relativ zu dem Schwimmkörper (5) in zwei zueinander rechtwinklig verlaufenden Horizontalrichtungen bewegbar ist, festgeklemmt und gesichert wird, wobei die Unterstützungsvorrichtung (8) nicht an einer höheren Stelle als dem Schwerpunkt, vorzugsweise nahe dem unteren Ende, an der Offshore-Konstruktion (1) angreift.

2. Verfahren nach Anspruch 1, **dadurch gekennzeichnet, dass** die zweite stationäre Unterstützung in einer Arbeitsumgebung vorgesehen ist, in der die Offshore-Konstruktion (1) auf optimale Weise zu Wartungs-, Reparatur-, Austausch- und ähnlichen Zwecken zugänglich ist, wobei die Offshore-Konstruktion (1) in der von der Unterstützungsvorrichtung (8) festgeklemmten und gesicherten Position von dem Schwimmkörper (5) von der ersten zu der zweiten stationären Unterstützung oder von der zweiten zu der ersten Unterstützung gebracht wird.

3. Verfahren nach Anspruch 1 oder 2, **dadurch gekennzeichnet, dass** die Offshore-Konstruktion (1) von der einen stationären Unterstützung aus von dem Schwimmkörper (5) aufgenommen wird, an dem zu diesem Zweck die bewegbaren Angreifeinrichtungen zum kontrollierten Bewegen der Offshore-Konstruktion (1) relativ zu der stationären Unterstützung in den drei rechtwinklig zueinander verlaufenden Richtungen vorgesehen sind, und nach dem Transport zu der anderen Unterstützung mittels des Schwimmkörpers (5) kontrolliert auf dieser befestigt wird.

4. Verfahren nach Anspruch 3, **dadurch gekennzeichnet, dass** die Vertikalverschiebung mittels eines selbstfahrenden Schwimmkörpers (5), wie z.B. einer selbstfahrenden Hubplattform, die relativ zu dem unter Wasser befindlichen Boden einstellbar ist, und der zwei zueinander rechtwinklig verlaufenden Verschiebungen unter Verwendung eines Auslegers, der die Unterstützungsvorrichtung (8) bildet, die zum Bewegen in zwei rechtwinklig zueinander verlaufenden Horizontalrichtungen mit dem Schwimmkörper (5) verbunden ist, in eine vorstehende Position relativ zu dem Schwimmkörper (5) erfolgt.

5. Verfahren nach einem der vorhergehenden Ansprüche, **dadurch gekennzeichnet, dass** eine auf einem Fundament (9) zu platzierende Offshore-Konstruktion (1) zwecks exakter Ausrichtung relativ zu dem Fundament (9) gedreht wird.

6. Verfahren nach einem der vorhergehenden Ansprüche, **dadurch gekennzeichnet, dass** das auf oder in dem Boden (12) verankerte Fundament (9,10) von dem auf geeignete Weise für diesen Zweck ausgelegten Schwimmkörper (5) bereitgestellt wird.

7. Verfahren nach Anspruch 6, **dadurch gekennzeichnet, dass** mittels des Schwimmkörpers (5) auf einem Fundamentteil (10), der auf oder in dem Meeresboden (12) verankert ist, ein weiterer über die Wasserlinie ragender Fundamentteil in Form eines Anschlussteils oder Zwischenteils (11) angeordnet wird, bevor die Offshore-Konstruktion (1) auf dem Fundament (9) platziert wird.

8. Selbstfahrender Transportschwimmkörper (5) zur Verwendung bei einem Verfahren nach einem der Ansprüche 1-7, wobei der Schwimmkörper (5) eine Deckkonstruktion und eine Unterstützungsvorrichtung (8) mit Angreifeinrichtungen aufweist, die in einer Vertikalrichtung relativ zu dem Meeresboden (12) und in zwei rechtwinklig zueinander verlaufenden Horizontalrichtungen zu mindestens einer Position hinter der Deckkonstruktion bewegbar sind, um eine Offshore-Konstruktion (1) zu oder von einer Stelle außerhalb des Schwimmkörpers zu bewegen, sie an einer Stelle außerhalb des Schwimmkörpers abzusetzen oder sie von einer Stelle außerhalb des Schwimmkörpers aufzunehmen, wobei der Schwimmkörper (5) Einrichtungen zum kontrollierten Bewegen des Schwimmkörpers (5) in einer stationären Position relativ zu dem Meeresboden (12), d.h. in Vertikalrichtung, aufweist, wobei die Unterstützungsvorrichtung (8) mit dem Schwimmkörper (5) verbunden ist und relativ zu der Deckkonstruktion des Schwimmkörpers (5) in zwei rechtwinklig zueinander verlaufenden Richtungen bewegbar ist, die beide im rechten Winkel zu der kontrollierten, im Wesentlichen vertikalen Verschiebung des Schwimmkörpers (5), d.h. in zwei Horizontalrichtungen, verlaufen,
**dadurch gekennzeichnet, dass**
die Unterstützungsvorrichtung (8) Sicherungs- und Fixiereinrichtungen aufweist, die die Angreifeinrichtungen bilden, welche die Offshore-Konstruktion (1) um einen Mast (2) festklemmen und mit der Unterstützungsvorrichtung (8) im Wesentlichen nahe der Ebene der Deckkonstruktion derart verbunden sind, dass die Einrichtungen nur auf kontrollierte Weise in einer im Wesentlichen horizontalen Ebene von der Unterstützungsvorrichtung (8) bewegbar sind, wobei die Angreifeinrichtungen zum fixierenden und sichernden Angreifen an der Offshore-Konstruktion (1) nicht an einer höheren Stelle als ihrem Schwerpunkt, vorzugsweise nahe ihrem unteren Ende, vorgesehen sind.

9. Schwimmkörper nach Anspruch 8, **dadurch gekennzeichnet, dass** die Einrichtungen zum kontrollierten vertikalen Bewegen des Schwimmkörpers (5) **dadurch** realisiert sind, dass der Schwimmkörper (5) als selbstfahrende Hubplattform ausgebildet ist und die Unterstützungsvorrichtung (8) als mit der selbstfahrenden Hubplattform verbundener Ausleger zum Bewegen in zwei rechtwinklig zueinander verlaufenden Horizontalrichtungen in eine vorstehende Position relativ zu der Plattform ausgeführt ist.

10. Schwimmkörper nach Anspruch 8 oder 9, **dadurch gekennzeichnet, dass** die Sicherungs- und Klemmeinrichtungen mit einem Teil der Unterstützungsvorrichtung (8) verbunden sind, wobei dieser Teil relativ zu dem verbleibendem Teil der Unterstützungsvorrichtung (8) zumindest um eine Mittelachse, vorzugsweise drei rechtwinklig zueinander verlaufende Mittelachsen, drehbar ist.

11. Schwimmkörper nach einem der Ansprüche 8-10, **dadurch gekennzeichnet, dass** er zum Platzieren eines Fundaments (9) für die Positionierung der Offshore-Konstruktion in oder auf dem Meeresboden vorgesehen ist.

12. Schwimmkörper nach einem der Ansprüche 8-11, **dadurch gekennzeichnet, dass** er zum Platzieren eines als Anschlussteil (11) oder Zwischenteil ausgebildeten Fundamentteils auf einem zuvor platzierten Fundamentteil (10) vorgesehen ist.

## Revendications

1. Procédé pour manipuler une construction offshore (1), dans lequel un premier support stationnaire est réalisé sous la forme d'une fondation (9) ancrée sous l'eau sur ou dans un fond marin (12) pour la construction offshore (1) dans un état d'utilisation, tandis que la construction offshore (1) est entièrement placée depuis un navire (5) sur la fondation (9) par des moyens d'engagement mobiles pour déplacer la construction offshore (1) dans une direction verticale et deux directions horizontales mutuellement perpendiculaires, dans lequel la construction offshore (1), de manière plus particulière une construction offshore (1) pourvue d'un mât (2) telle qu'une éolienne offshore, est soulevée par les moyens d'engagement mobiles reliés au navire (5), depuis un deuxième support stationnaire à l'extérieur du navire (5), par exemple sur la côte ou à proximité de cette dernière, et est fixée par rapport au navire (5) et est transportée vers le premier support stationnaire et, via les moyens d'engagement mobiles, est installée sur celui-ci de manière alignée et fixée, **caractérisé en ce que**, pour la manipulation, la construction offshore (1) est montée et fixée par un dispositif de support (8) faisant partie des moyens d'engagement mobiles et étant mobile dans les deux directions horizontales mutuellement perpendiculaires par rapport au navire (5), ledit dispositif de support (8) engageant la construction offshore (1) à un niveau non supérieur à son centre de gravité, de manière davantage préférée à proximité de son extrémité inférieure.

2. Procédé selon la revendication 1, **caractérisé en ce que** le deuxième support stationnaire est agencé dans un environnement de travail qui rend la construction offshore (1) accessible de manière optimale à des fins de maintenance, de réparation, de remplacement et similaires, tandis que la construction offshore (1), dans la position montée et fixée par le dispositif de support (8), est amenée par le navire (5) depuis les première et deuxième supports stationnaires ou du deuxième au premier support stationnaire.

3. Procédé selon la revendication 1 ou 2, **caractérisé en ce que** la construction offshore (1) est soulevée depuis le premier support stationnaire par le navire (5) muni à cet effet des moyens d'engagement mobiles pour déplacer la construction offshore (1) par rapport au support stationnaire d'une manière contrôlée dans lesdites trois directions mutuellement perpendiculaires et, après le transport à l'autre support, est fixée à l'aide du navire (5) sur celui-ci d'une manière contrôlée.

4. Procédé selon la revendication 3, **caractérisé en ce que** le déplacement vertical est effectué à l'aide d'un navire automoteur (5) tel qu'une plate-forme autoélévatrice automotrice, réglable par rapport au fond marin sous l'eau, et les deux déplacements mutuellement perpendiculaires par un porte-à-faux formant un dispositif de support (8), relié au navire (5) pour le mouvement dans deux directions horizontales, perpendiculaires l'une à l'autre, dans une position en saillie par rapport au navire (5).

5. Procédé selon l'une quelconque des revendications précédentes, **caractérisé en ce qu'**une construction offshore (1) devant être placée sur une fondation (9) est pivotée par rapport à la fondation (9) de manière à présenter un alignement exact.

6. Procédé selon l'une quelconque des revendications précédentes, **caractérisé en ce que** la fondation (9, 10) ancrée sur ou dans le fond marin (12) est agencée à l'aide du navire (5) conçu de manière appropriée dans ce but.

7. Procédé selon la revendication 6, **caractérisé en ce que** avec le navire (5) sur une partie de fondation (10) ancrée sur ou dans le fond marin (12), une partie de fondation supplémentaire allant au-delà de la surface de l'eau sous la forme d'une pièce de fixation ou d'une pièce intermédiaire (11) est agencée avant que la construction offshore (1) soit placée sur la fondation (9).

8. Navire de transport automoteur (5) adapté pour être utilisé dans un procédé selon l'une quelconque des revendications 1 à 7, le navire (5) étant pourvu d'une construction de pont et d'un dispositif de support (8) avec des moyens d'engagement, les moyens d'engagement étant mobiles dans une direction verticale par rapport au fond marin (12) et dans deux directions horizontales mutuellement perpendiculaires par rapport à au moins une position au-delà de la construction de pont pour déplacer une construction offshore (1) et l'installer sur ou la soulever depuis un emplacement à l'extérieur du navire, ledit navire (5) étant pourvu de moyens conçus pour déplacer le navire (5) dans une position stationnaire par rapport au fond marin (12) d'une manière contrôlée, c'est-à-dire dans ladite direction verticale, ledit dispositif de support (8) étant relié au navire (5) et étant mobile par rapport à ladite construction de pont du navire (5) dans deux directions mutuellement perpendiculaires qui sont toutes deux à angle droit par rapport au déplacement contrôlé sensiblement vertical du navire (5), c'est-à-dire sont dirigées dans deux directions horizontales, **caractérisé en ce que** le dispositif de support (8) est pourvu de moyens de positionnement et de fixation, qui sont les moyens d'engagement, pour fixer la construction offshore (1) autour d'un mât (2) et sont reliés au dispositif de support (8) sensiblement à proximité du niveau de la construction de pont de telle manière que lesdits moyens soient uniquement mobiles d'une manière contrôlée dans un plan sensiblement horizontal par ledit dispositif de support (8), dans lequel les moyens d'engagement sont agencés pour engager la construction offshore (1) d'une manière positionnée et fixée, à un niveau non supérieur à son point de gravité, de manière davantage préférée à proximité de son extrémité inférieure.

9. Navire selon la revendication 8, **caractérisé en ce que** les moyens conçus pour le déplacement vertical contrôlé du navire (5) sont réalisés **en ce que** le navire (5) est conçu en tant que plate-forme autoélévatrice automotrice, et grâce à la conception du dispositif de support (8) en tant que porte-à-faux, relié à la plate-forme autoélévatrice automotrice pour le mouvement dans deux directions horizontales, perpendiculaires l'une à l'autre, dans une position de saillie par rapport à la plate-forme.

10. Navire selon la revendication 8 ou 9, **caractérisé en ce que** les moyens de fixation et de montage sont reliés à une partie du dispositif de support (8), ladite partie étant en mesure de pivoter par rapport à la partie restante du dispositif de support (8) autour d'au moins un axe central, de préférence trois axes centraux mutuellement perpendiculaires.

11. Navire selon l'une quelconque des revendications 8 à 10, **caractérisé en ce qu'**il est conçu pour placer une fondation (9) pour la construction offshore à positionner, dans ou sur le fond marin.

12. Navire selon l'une quelconque des revendications 8 à 11, **caractérisé en ce qu'**il est conçu pour placer une partie de fondation conçue en tant que pièce de fixation (11) ou pièce intermédiaire sur une partie de fondation placée précédemment (10).
